Europäisches Patentamt

European Patent Office

Office européen des brevets

(11) Publication number: **0 430 681 A2**

# EUROPEAN PATENT APPLICATION

(21) Application number: 90312963.3

(51) Int. Cl.⁵: **G01L 9/06**

(22) Date of filing: 29.11.90

(30) Priority: 30.11.89 US 444065

(43) Date of publication of application:
05.06.91 Bulletin 91/23

(84) Designated Contracting States:
DE FR GB IT NL Bulletin 1

author

(71) Applicant: HONEYWELL INC.
Honeywell Plaza
Minneapolis Minnesota 55408(US)

(72) Inventor: Hines, J. R.
2008 Scarlet Oak Street
Richardson, Texas 75081(US)

(74) Representative: Fox-Male, Nicholas Vincent
Humbert
Honeywell Control Systems Limited Charles
Square
Bracknell Berkshire RG12 1EB(GB)

(54) **Thick diaphragm pressure transducer.**

(57) A thick diaphragm piezoresistive transducer (100) is capable of operating at around 1000 p.s.i. or above and is formed by placing a thin layer of silicon (120, 120') having a first conductivity type on a major surface of a thick layer of silicon (110, 110') having a second conductivity type. A portion of the thin layer is then electromchemically etched away. Resistors are diffused into another major surface of the thick layer, which is opposite the thin layer.

Fig.1

EP 0 430 681 A2

# THICK DIAPHRAGM PRESSURE TRANSDUCER

## BACKGROUND OF THE INVENTION

This invention is directed toward the field of piezoresistive transducers. More specifically, the invention is a high pressure transducer and a method of making the transducer.

One known way of making piezoresistive pressure transducers is by depositing a thin N-type epitaxial layer over a P type substrate, and then etching away part of the substrate. Normally, a P type substrate and an N type epitaxial layer are used so that P type resistors may be implanted or diffused within the N type layer. P type resistors are preferred because the resistor forms a P-N junction, thus isolating the resistors. After the etching has occurred, a thin N type diaphragm having P type resistors remains, supported by a P type rim.

Generally, transducer sensitivity is a function of the size and thickness of the diaphragm. For low pressure sensing applications, a thin diaphragm of predictable thickness is required. Such a thin diaphragm is created by the above prior art method and device since the P-N junction inbetween the epitaxial layer and the P type substrate effectively terminates the etch process. However, the prior art method and device cannot be used in high pressure applications because the diaphragm tends to rupture. Physical problems limit the thickness of a epitaxial layer to less than 100 microns, thus limiting the pressure at which the above described transducer may be used. In order to measure higher pressures such as 1000 p.s.i., a thicker diaphragm was necessary.

One known attempted solution to this problem is to take a N type substrate, form resistors within the substrate and etch holes in the substrate on the side away from the resistors thus forming a diaphragm. The size and thickness of the diaphragm is determined by the size and depth of the holes. Here, sensitivity of the transducer is determined by wafer thickness, size and depth of the hole opened by the photo mask, and the etch chemistry. The etching step cannot be controlled very well since there is no P-N junction to stop the etch so the depth and size of the holes varies from sensor to sensor. Because of this hole depth and size variation, the sensitivity of the transducers varies as well. Many unusable transducers are produced because their pressure ranges are outside the required limits.

## SUMMARY OF THE INVENTION

The present invention is a transducer with a thick diaphragm of predictable thickness that is capable of withstanding high pressure, and a method of making such a transducer. The transducer comprises a thick N type substrate of known thickness which serves as the diaphragm with embedded P type resistors on one side of the substrate supported by a P type epitaxial rim on the side away from the resistors. The transducer is made by first, forming a thick N type substrate. Then, a thin P type layer is formed next to the substrate. A portion of the P type layer is then electrochemically etched away leaving a rim which is used to support the N type substrate as a diaphragm. P type resistors are diffused or implanted in the substrate on the surface away from the rim. By using this method, diaphragm size is not dependent upon the etching process. Instead, the diaphragm size is merely dependent upon substrate thickness, which is readily controllable. Since sensitivity is dependent upon diaphragm thickness and the diaphragm thickness is now precisely controllable, sensitivity of the transducer may be better controlled. The ability to control sensitivity of the transducers, increases yield of a production batch and thus reduces cost per transducer.

## BRIEF DESCRIPTION OF THE DRAWINGS

Figure 1 shows a side view of the layers of the present transducer.

Figure 2 shows a top view of the present transducer.

Figure 3 shows a sectional view of the present transducer taken along lines 3-3.

Figure 4 is a bottom view of the present transducer after a portion of the rim material has been etched away.

## DETAILED DESCRIPTION OF THE DRAWINGS

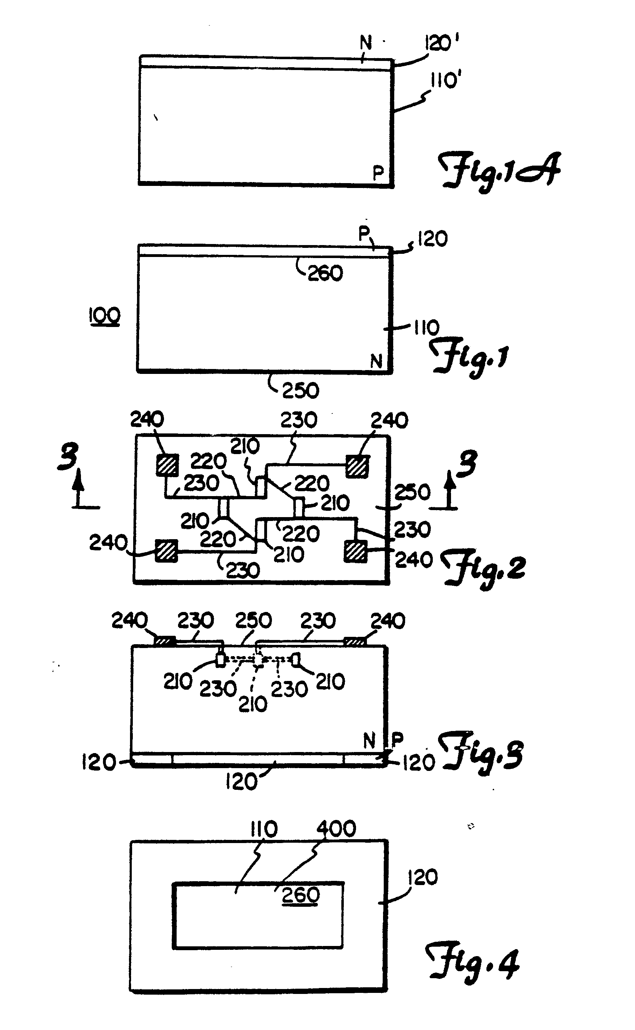

Referring now to Figure 1, there is shown two basic silicon layers 110 and 120 of the present transducer structure 100. Substrate layer 110 of N type material is sliced to a desired thickness from a silicon crystal. After performing standard polishing techniques, a P type layer 120 is grown or formed on or bonded to major surface 260 of substrate 110. In one embodiment the substrate thickness is on the order of 200 microns and the layer 120 is about 25-50 microns. Substrate 110 also has a major surface 250.

Once the basic structure 100 is complete, a mask (not shown) is temporarily deposited on surface 50 and is used to delineate and form resistors, connections to the resistors and connections between the resistors. These elements are shown in Figures 2 and 3. It is to be understood that the growing, forming or bonding of the P type layer 120 to the substrate may occur after the resistors are formed in the substrate if desired.

Figure 2 shows four resistors 210 connected in a conventional electrical bridge arrangement through connections 220. The resistors 210 are comprised of P type material and are made by diffusing or implanting a group III element such as boron within the N type substrate. The connections 220 are comprised of low resistivity P type material, preferably gold, aluminum, polysilicon or other interconnect material and are buried under the surface. In order to connect the transducer 100 to external circuitry, connections 230 and connection points 240 are provided. Connections 230 may be made from the same materials used in connections 220, and are buried under the surface if P type material is used or placed on the surface for other materials. Leadouts or contact areas 240 are located on major surface 250 and each area is electrically connected to a resistor 210 through a connection 230. Leadout or contact area 240 is preferably made from a metal having a high conductivity.

Either before or after the resistors and associated connections and contact points are formed, a cavity 400 is electrochemically etched into the P type material 120. A mask (not shown) to delineate the cavity is placed over the P type material 120. The transducer 100 is then placed in an etchant bath. The bath contains an etchant such as potassium hydroxide (KOH) which is charged by an electric current. The etchant dissolves away the unmasked P type material completely down to the surface 260 of the N-substrate. Once the etchant has etched away all the exposed P type material, no path remains for the electric current and etching ceases. Thus, by carefully choosing the substrate thickness and allowing the etching to continue until completed, the diaphragm thickness can be carefully controlled which in turn means that sensitivity of the transducer can be controlled. The ability to precisely control the sensitivity of the transducer during its construction will then result in a high rate of acceptance with less transducers being produced outside the required sensitivity ranges, and thereby lower costs per transducer.

It is to be noted that while a N type substrate and P type epitaxial layer are described in the preferred embodiment, a transducer having a P type substrate and N type epitaxial layer and N type resistors may be built with the herein described method. Such an embodiment is shown in Figure 1a. Minor adjustments which would be obvious to one of ordinary skill in the art would be required. However, usage of P type resistors in an N type diaphragm is more desirable due to the P type resistors greater sensitivity.

While the foregoing is a description of the best mode of practicing the claimed invention, other modes of practicing the claimed invention will be obvious to one of ordinary skill in the art. The applicant does not intend to be limited to solely the invention described within the specification, but instead intends to be limited to the invention as defined by the following appended claims.

## Claims

1. A method of producing a piezoresistive pressure transducer characterised by the steps of:
   forming a substrate (110, 110') out of a semiconductor material, the semiconductor material being doped to constitute material being a first conductivity type, said substrate having first (260) and second major surfaces and outer edges;
   forming a layer (120, 120') of material being a second material conductivity type on said first major surface (260);
   masking said second conductivity type material (120, 120'); etching electrochemically said second conductivity type material (120, 120'), said masking electrochemical etching learning a rim of said second conductivity type material near said outer edges; and,
   diffusing a plurality of said second conductivity type resistors (210) into said first conductivity type material near said second major surface.

2. A method according to Claim 1 characterised in that said second conductivity type layer (120, 120') is formed by epitaxially growing said second conductivity type material on said first major surface (260).

3. A method according to Claim 1 or 2 characterised in that said second conductivity type layer is formed by bonding a wafer of said second conductivity type material to said first major surface (260).

4. A method according to any of Claims 1 to 3 characterised in that said second conductivity type layer is formed by diffusing a group III element into said substrate (110, 110') through said first major surface (260).]

5. A high pressure piezoresistive transducer characterised by:
   a substrate (110, 110') of semiconductor material being a first conductivity type, said substrate having first (260) and second major surfaces and outer edges on each major surface;

a rim (120) of semiconductor material being a second conductivity type formed on said first major surface (260) of said substrate (110, 110'), said rim being formed by forming said second conductivity type material on said first major surface (260) of said substrate, then electrochemically etching away a portion of said second type material to leave said rim on the outer edge of said major surface; and

a plurality of resistors (210), said resistors being formed within said substrate near said second major surface, said resistors being comprised of said second type material.

6. A high pressure piezoresistive transducer characterised by:

a substrate (110, 110') of semiconductor material being a first conductivity type, said substrate having first (260) and second major surfaces and outer edges on each major surface;

a rim (120) of semiconductor material being a second conductivity type formed on said first major surface (260) of said substrate; and

a plurality of resistors (210), said resistors being formed within said substrate near said second major surface, said resistors being comprised of the other second type material.

Fig.1A

Fig.1

Fig.2

Fig.3

Fig.4